# EUROPÄISCHE PATENTSCHRIFT

(11) **EP 0 492 102 B1**
(45) Veröffentlichungstag und Bekanntmachung des Hinweises auf die Patenterteilung: **14.06.1995**
(21) Anmeldenummer: 91119114.6
(22) Anmeldetag: 11.11.1991
(51) Int. Cl.: B41F 13/20, B41F 27/10, F16C 13/02

(54) **Lagerung für einen Druckwerkzylinder**
Bearing for a printing unit cylinder
Palier pour cylindre de groupe d'impression

(30) Priorität: 22.12.1990 DE 4041497
(43) Veröffentlichungstag der Anmeldung: 01.07.1992
(73) Patentinhaber: MAN Roland Druckmaschinen AG, 63012 Offenbach (DE)
(72) Erfinder: Reichenbach, Klaus, O-9900 Plauen (DE); Matthes, Klaus, O-9900 Plauen (DE)

(56) Entgegenhaltungen:
- EP-A- 0 352 599
- DE-A- 1 922 274
- DE-C- 0 490 994
- FR-A- 0 819 528
- US-A- 2 090 939

## Beschreibung

Die Erfindung betrifft eine Lagerung für einen Druckwerkzylinder einer Rotationsdruckmaschine gemäß dem Oberbegriff des Patentanspruchs 1.

Die Lagerung eines derartigen Zylinders wird in der DE-PS 891 396 gezeigt. Danach ist das Lager des Zylinderzapfens in der bedienseitigen Gestellwand in einem Tragkörper angeordnet, der im Außendurchmesser größer als der Druchmesser des Druckwerkzylinders ist. Durch Entfernen des Tragkörpers wird in der Maschinenseitenwand eine Öffnung freigegeben, durch die von dem in der anderen Maschinenseitenwand gehaltenen Druckwerkzylinder der Mantel aus der Druckmaschine geführt werden kann. Zum Entfernen des Tragkörpers wird dieser mittels einer Vorrichtung zunächst aus der Maschinenseitenwand herausgezogen und danach zur Seite geschwenkt. Dies beansprucht erheblichen Platz und schränkt die Zugänglichkeit der Druckmaschine auf der Bedienseite ein.

Die EP-A-0 352 599 zeigt ebenfalls eine Druckeinheit, bei der mindestens ein Druckwerkzylinder einen durch eine Öffnung einer Maschinenseitenwand auswechselbaren Mantel trägt. Die Öffnung ist durch horizontal auseinanderfahrbare Wände, in denen der Zapfen des Zylinders gelagert ist, freilegbar. Dieser Aufbau erfordert eine hinsichtlich der Dynamik und Bearbeitungsgenauigkeit aufwendige Konstruktion.

Eine Lagerung eines Tiefdruckformzylinders beiderseits in Schwenkhebeln zeigt die DE-A-19 22 274. Die Hebel schwenken den Zylinder aus dem Druckwerk heraus, wonach die Gehäuse geöffnet werden, in denen die Zapfen lagern. Über die Arretierung der Hebel in der Betriebsstellung sind keine Aussagen gemacht.

Der Erfindung liegt die Aufgabe zugrunde, eine Zylinderlagerung zu schaffen, die sich durch geringen Herstellungsaufwand auszeichnet und die auf einfache und platzsparende Weise den Zylinderzapfen freizulegen, bzw. positionsgenau festzulegen vermag.

Diese Aufgabe wird erfindungsgemäß bei einer gattungsgemäßen Vorrichtung durch die gegenständlichen Merkmale des kennzeichnenden Teils des Anspruchs 1 gelöst. Durch die Lagerung des Zapfens in dem Hebel kann die Wandöffnung für das Durchführen des Zylindermantels auch im Druckbetrieb bestehen bleiben, wodurch sich ein Tragkörper für das Lager sowie eine Vorrichtung für seine Entfernung erübrigen, ebenso wie der dafür erforderliche Platz auf der Bedienseite. Mit dem Öffnen des Gehäuses und Wegschwenken des Hebels wird der Zapfen des Zylinders für einen Wechsel des Zylindermantels in platzsparender Weise freigegeben. Die Lagerung ermöglicht weiterhin in einfacher Weise die erforderliche Einstellung des Hebels für eine vorzunehmende Positionierung des in ihm gelagerten Druckwerkzylinders.

Die Lagerung ist vorteilhaft wegschwenkbar, wenn erfindungsgemäß an dem Hebel ein schwenkbar in der Maschinenseitenwand gelagerter Arbeitszylinder angelenkt ist.

Der Hebel ist vorteilhaft arretierbar, wenn erfindungsgemäß mit der der Anschlagseite des Hebels gegenüberliegenden Seite ein Exzenterbolzen zusammenarbeitet, der dreh- und schiebbar in der Maschinenseitenwand lagert, mittels eines im Gestell gelagerten Hebels, der mit zwei Rollen in eine umlaufende Nut des Exzenterbolzens eingreift, mit einem schwenkbar in der Maschinenseitenwand gelagerten Arbeitszylinder in Verbindung steht sowie schiebbar in einer Nabe geführt ist, die drehbar an der Maschinenseitenwand befestigt ist und an der ein schwenkbar in der Maschinenseitenwand gelagerter Arbeitszylinder angelenkt ist oder mit der der Anschlagseite des Hebels gegenüberliegenden Seite ein angeschrägter Bolzen zusammenarbeitet, der schiebbar in der Maschinenseitenwand lagert und mittels eines Bolzens in die Langlöcher eines Gabelhebels eingreift, der schwenkbar in der Maschinenseitenwand gelagert ist und gelenkig mit einem ebenfalls schwenkbar in der Maschinenseitenwand gelagerten Hebel verbunden ist.

Der Zylinderzapfen ist vorteilhaft lagerbar, wenn erfindungsgemäß das Gehäuse aus einer fest und einer schwenkbar mit dem Hebel verbundenen Schale besteht` in der festen Schale, dreh- und schiebbar ein Haken lagert, der mit einem Bolzen der schwenkbaren Schale zusammenarbeitet, der Haken quer zur Schieberichtung ein Langloch trägt, in das ein Exzenter eingreift, der über einen Klemmhebel mit einem am Hebel schwenkbar gelagerten Arbeitszylinder in Antriebsverbindung steht, und an der schwenkbaren Schale ein schwenkbar am Hebel gelagerter Arbeitszylinder angelenkt ist.

Weitere erfindungemäße Varianten der Aufnahme des Zylinderzapfens werden mit den Ansprüchen 7 und 8 vorgeschlagen.

Die Erfindung soll nachfolgend an einigen Ausführungsbespielen näher erläutert werden. In den zugehörigen Zeichnungen zeigt
- Fig. 1:: ein Druckwerk schematisch, in der Seitenansicht, geschnitten
- Fig. 2:: den Schnitt A-A nach Figur 1
- Fig. 3:: die Einzelheit Z nach Figur 1, ohne Darstellung des Zylinderzapfens samt Lager
- Fig. 4:: den Schnitt B-B nach Figur 3
- Fig. 5:: den Schnitt C-C nach Figur 4
- Fig. 6:: den Schnitt D-D nach Figur 4
- Fig. 7:: den Schnitt E-E nach Figur 3
- Fig. 8:: den Schnitt F-F nach Figur 3
- Fig. 9:: eine zur Figur 3 analoge Variante eines Gehäuses
- Fig. 10:: den Schnitt G-G nach Figur 9
- Fig. 11:: eine zu Figur 3 analoge Variante eines Gehäuses
- Fig. 12:: den Schnitt H-H nach Figur 11
- Fig. 13:: den Schnitt I-I nach Figur 11
- Fig. 14:: eine zu Figur 2 analoge Variante einer Hebelarretierung.

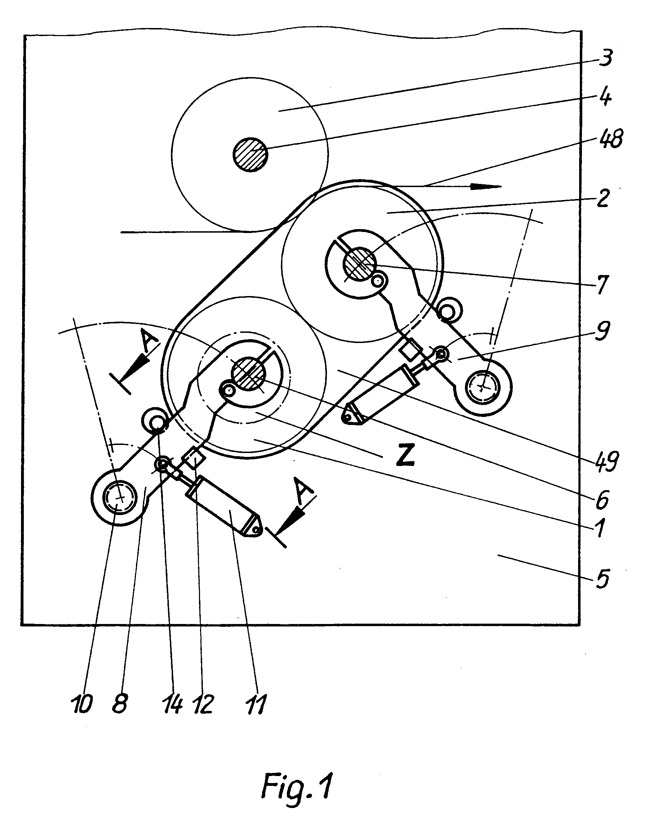

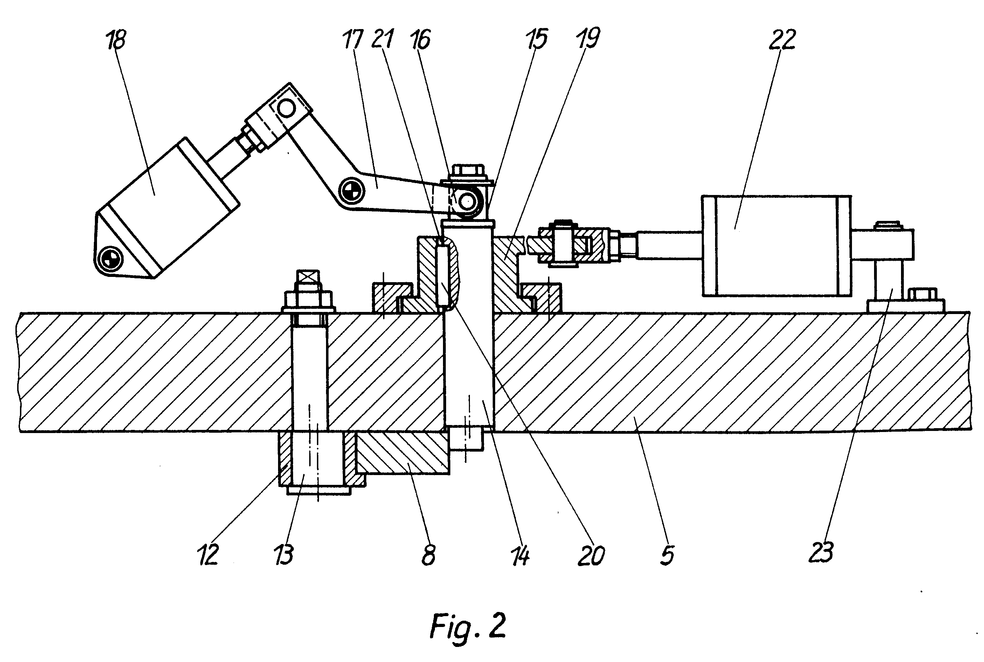

Das in Figur 1 schematisch dargestellte Druckwerk arbeitet nach dem Offsetdruckprinzip und enthält einen Formzylinder 1, einen Übertragungszylinder 2 und einen Druckzylinder 3. Während der Zapfen 4 des Druckzylinders 3 in der Maschinenseitenwand 5 lagert, werden die Zapfen 6 und 7 des Form- und Übertragungszylinders 1; 2 in Hebeln 8; 9 aufgenommen. Da die Lagerungen in den Hebeln 8 und 9 prinzipiell gleichartig sind, wird im weiteren nur die erstere beschrieben. Der Hebel 8 ist an der Maschinenseitenwand 5 innen angeordnet und auf einem in letzterer befestigten Bolzen 10 gelagert. Am Hebel 8 ist ein an der Maschinenseitenwand 5 schwenkbar gelagerter Arbeitszylinder 11 angelenkt, der den Hebel 8 gegen einen Anschlag 12 zieht. Letzterer ist auf einem in der Maschinenseitenwand 5 gelagerten Exzenterbolzen 13 angeordnet (Fig. 2). Mittels des Exzenterbolzens 13 wird der Anschlag so eingestellt, daß der Hebel 8 die erforderliche Stellung für eine koaxiale Positionierung des Formzylinders 1 zum Übertragungszylinder 2 hat. Dem Anschlag 12 gegenüberliegend ist neben dem Hebel 8 ein Exzenterbolzen 14 angeordnet, der dreh- und schiebbar in der Maschinenseitenwand 5 gelagert ist. Er trägt eine umlaufende Nut 15, in die zwei Rollen 16 eingreifen, die an den Gabelenden eines Hebels 17 befestigt sind. Letzterer ist im Maschinengestell gelagert und gelenkig mit einem schwenkbar im Gestell gelagerten Arbeitszylinder 18 verbunden. An der Maschinenseitenwand 5 ist weiterhin eine Nahe 19 drehbar angeordnet, in der schiebbar aber unverdrehbar der Exzenterbolzen 14 geführt wird. Hierzu trägt der Exzenterbolzen 14 eine Paßfeder 20, die mit einer durchgehenden Nut 21 in der Nabe 19 zusammenarbeitet. Auch der Einsatz eines Keilwellenprofils wäre denkbar. An der Nahe 19 ist ein Arbeitszylinder 22 angelenkt, der auf einem gestellfesten Bolzen 23 lagert. Der Arbeitszylinder 23 stellt vermittels der genannten Elemente den Exzenterbolzen 14 an den Hebel 8 an, womit dieser spielfrei gehalten wird.

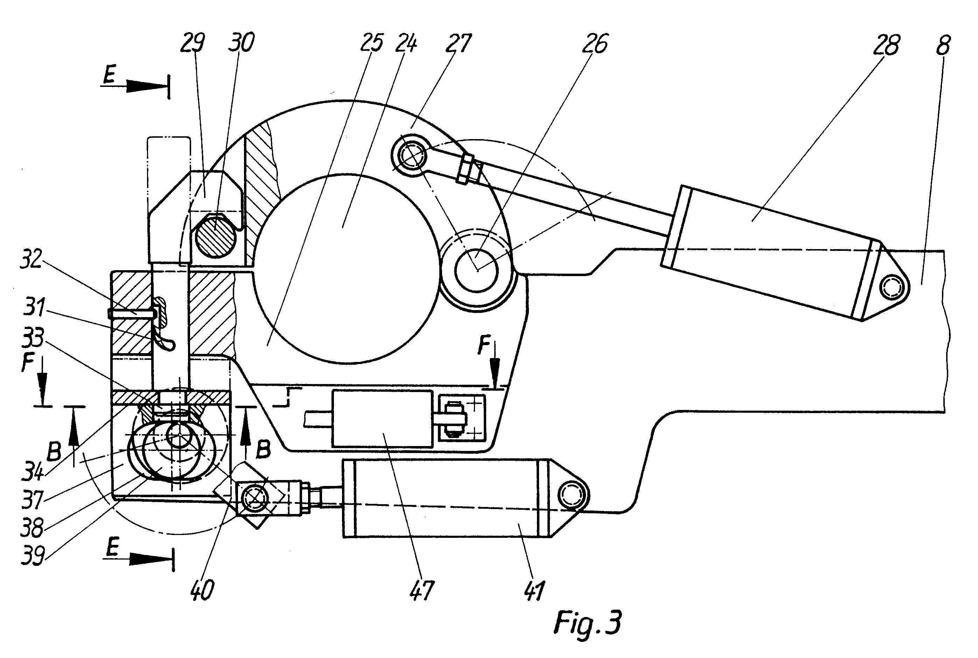

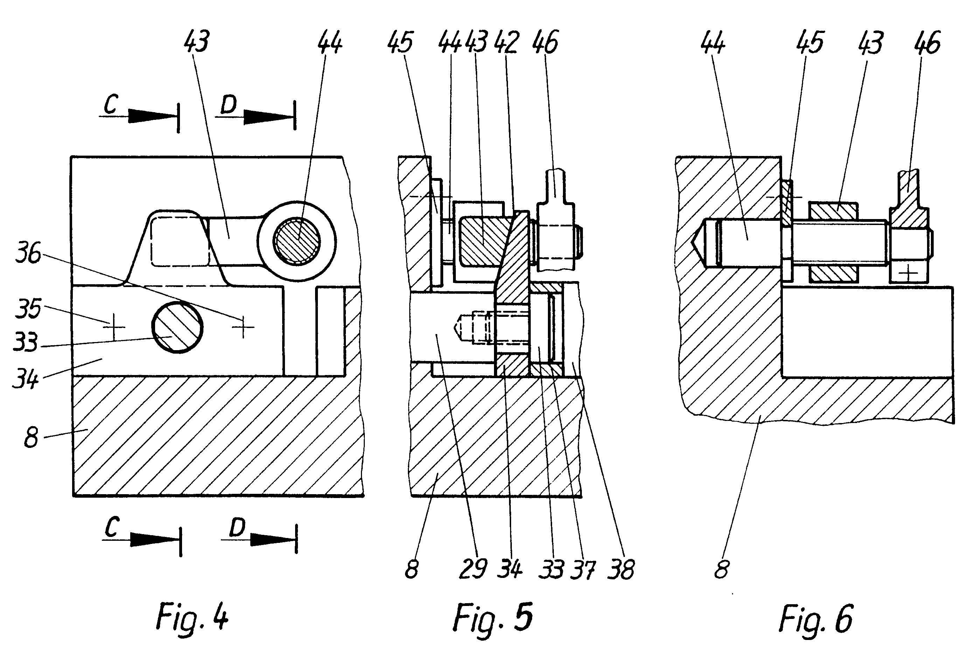

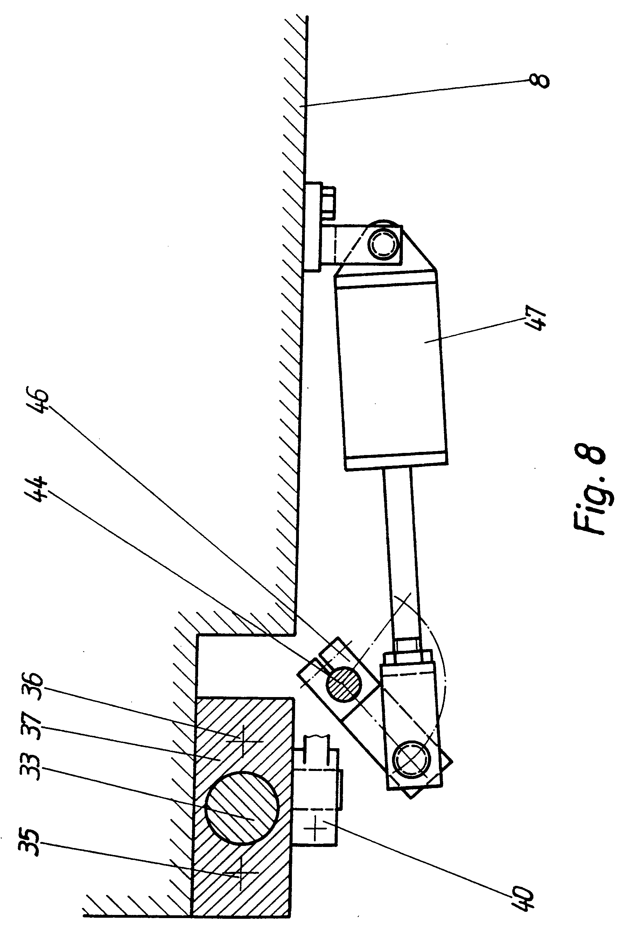

Der Hebel 8 trägt ein Gehäuse 24, das in Figur 3 nicht dargestellt den Zapfen 6 samt Lager und Exzenterbüchse aufnimmt. Das Gehäuse 24 besteht aus einer fest mit dem Hebel 8 verbundenen Schale 25 und einer um einen Bolzen 26 schwankbaren Schale 27. An letzterer ist ein am Hebel 8 schwenkbar gelagerter Arbeitszylinder 28 angelenkt. Verschlossen werden die Schalen 25 und 27 mittels eines Hakens 29, der an einem an der schwenkbaren Schale 27 angeordneten Bolzen 30 angreift. Der Haken 29 ist dreh- und schiebbar in der festen Schale 25 gelagert. Die Drehung des Hakens 29 erfolgt bei seiner Schiebung zwangläufig vermittels einer Nut 31 in seinem Schaft, in die ein Bolzen 32 eingreift. Stirnseitig ist mittels einer Schraube 33 an den Haken 29 eine Platte 34 angeschraubt (Fig. 5), an der wiederum mittels der Schrauben 35; 36 ein Klotz 37 angesetzt ist (Fig. 3; 4). Dieser weist quer zur Schieberichtung des Hakens 29 ein Langloch 38 auf, in das ein im Hebel 8 gelagerter Exzenter 39 eingreift (Fig. 7). Auf letzterem ist ein Hebel 40 geklemmt, mit dem ein schwenkbar am Hebel 8 aufgehängter Arbeitszylinder 41 als Antrieb für den Haken 29 angelenkt ist. Der Exzenter 39 ist durch entsprechende Klemmung des Hebels 40 einstellbar.

Die Platte 34 weist eine Anlauffläche 42 auf, die mit einem Hebel 43 zusammenarbeitet. Letzterer ist auf das Gewinde eines Bolzens 44 aufgeschraubt, der im Hebel 8 lagert. Er wird mittels einer in eine Nut eingreifenden geschlitzten Platte 45 axial gesichert (Fig. 6). Auf dem Bolzen 44 ist ein Hebel 46 geklemmt, an dem ein schwenkbar am Hebel 8 gelagerter Arbeitszylinder 47 angelenkt ist (Fig. 8). Dieser schwenkt und zieht den Hebel 43 gegen die Anlauffläche 42 und gewährleistet so die rüttelsichere Schließstellung des Hakens 29. Der Anschlag 43 ist durch Veränderung der Klemmung des Hebels 46 einstellbar.

Fig. 1 zeigt die Lagerung im Druckbetrieb, bei dem die Materialbahn 48 bedruckt wird. Für einen Wechsel der Druckform, die als vom Formzylinder 1 durch die Öffnung 49 der Maschinenseitenwand 5 schiebbare Hülse ausgebildet ist, muß zunächst der Zapfen 6 freigelegt werden. Hierzu wird der Arbeitszylinder 47 umgesteuert, wodurch der Hebel 43 von der Platte 34 weggeschwenkt wird. Mit dem anschließenden Umsteuern des Arbeitszylinders 41 wird der Haken 29 vom Bolzen 30 weggeschoben und gleichzeitig aus dessen Bereich herausgedreht. Nunmehr wird durch Umsteuern des Arbeitszylinders 28 die schwenkbare Schale 27 in ihre zweite Stellung bewegt und damit das Gehäuse 24 geöffnet. Weiterhin wird durch Umsteuern des Arbeitszylinders 22 der Exzenterbolzen 14 vom Hebel 8 wegbewegt und mit dem Umsteuern des Arbeitszylinders 18 aus dem Schwenkbereich des Hebels 8 in die Maschinenseitenwand 5 eingezogen. Nunmehr kann der Hebel 8 samt seinem geöffneten Gehäuse 24 vom Zapfen 6 weg in seine zweite Endlage geschwenkt werden. In dieser Stellung wird der Formzylinder 1 mit nicht zum Gegenstand der Erfindung gehörenden und daher nicht beschriebenen Mitteln fliegend in der antriebseitigen Maschinenseitenwand gehalten. Die erneute Aufnahme des Zapfens 6 im Hebel 8 nach erfolgtem Druckformwechsel erfolgt in umgekehrter Reihenfolge der beschriebenen Arbeitsschritte.

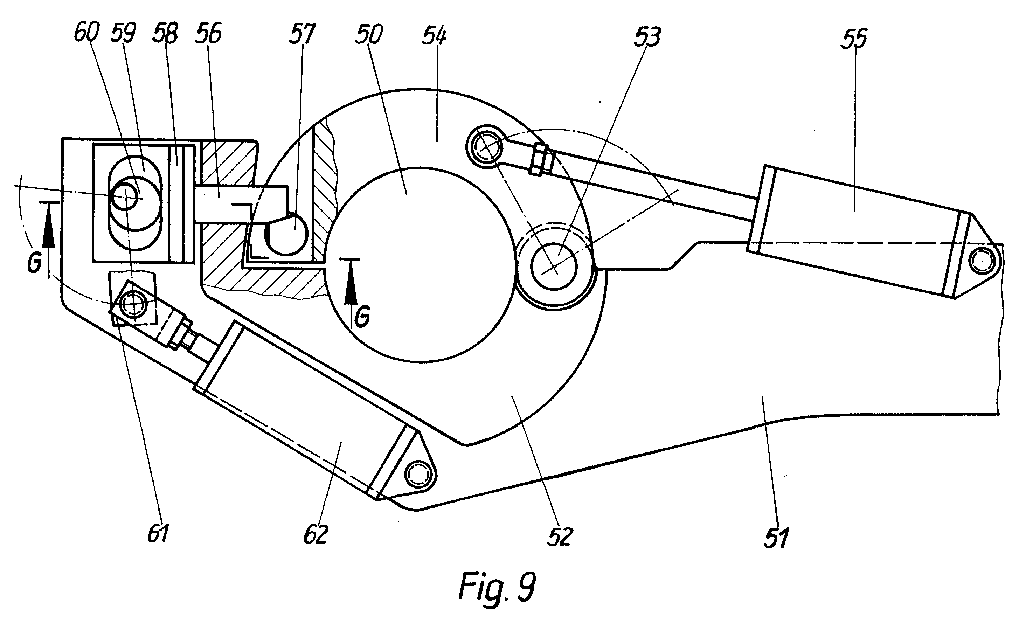

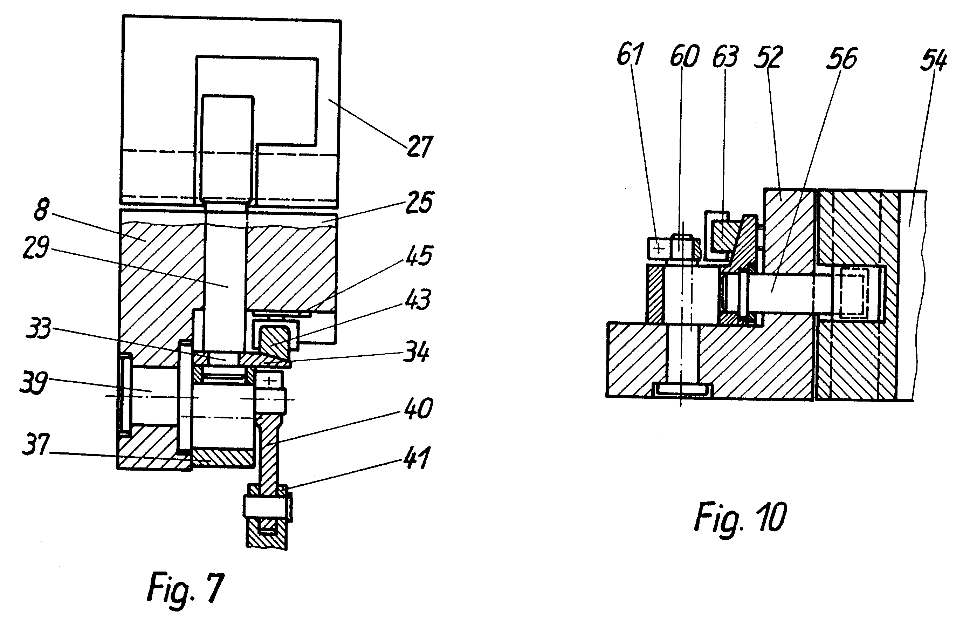

Figur 9 zeigt eine weitere Variante eines Gehäuses 50 eines Hebels 51. Das Gehäuse 50 besteht aus einer fest mit dem Hebel 51 verbundenen Schale 52 und einer um einen Bolzen 53 schwenkbaren Schale 54. An letzterer ist ein am Hebel 51 schwenkbar gelagerter Arbeitszylinder 55 angelenkt. Die Schalen 52; 54 werden mittels eines abgeschrägten Stößels 56, der mit einem an der schwenkbaren Schale 54 angeordneten Bolzen 57 zusammenarbeitet, verschlossen. Der Stößel ist in der festen Schale 52 schiebbar gelagert. Er ist fest mit einem Klotz 58 verbunden, der quer zur Schieberichtung des Stößels 56 ein Langloch 59 trägt. In letzteres greift ein im Hebel 51 gelagerter Exzenter 60 ein. Auf diesem ist ein Hebel 61 geklemmt, der mit einem schwenkbar am Hebel 51 gelagerten Arbeitszylinder 62 gelenkig verbunden ist. Der Stößel 56 ist weiterhin mit einer Rüttelsicherung (in Fig. 10 mit dem Hebel 63 angedeutet) ausgestattet, die der des Hakens 29 in Fig. 5 ähnelt und deshalb nicht näher beschrieben wird.

Das Gehäuse 50 wird geöffnet, indem zunächst der Arbeitszylinder 62 umgesteuert und mit einem damit bewirkten Verschieben des Stößels 56 der Bolzen 57 freigegeben wird. Mit dem anschließenden Umsteuern des Arbeitszylinders 55 wird die Schale 54 aufgeklappt.

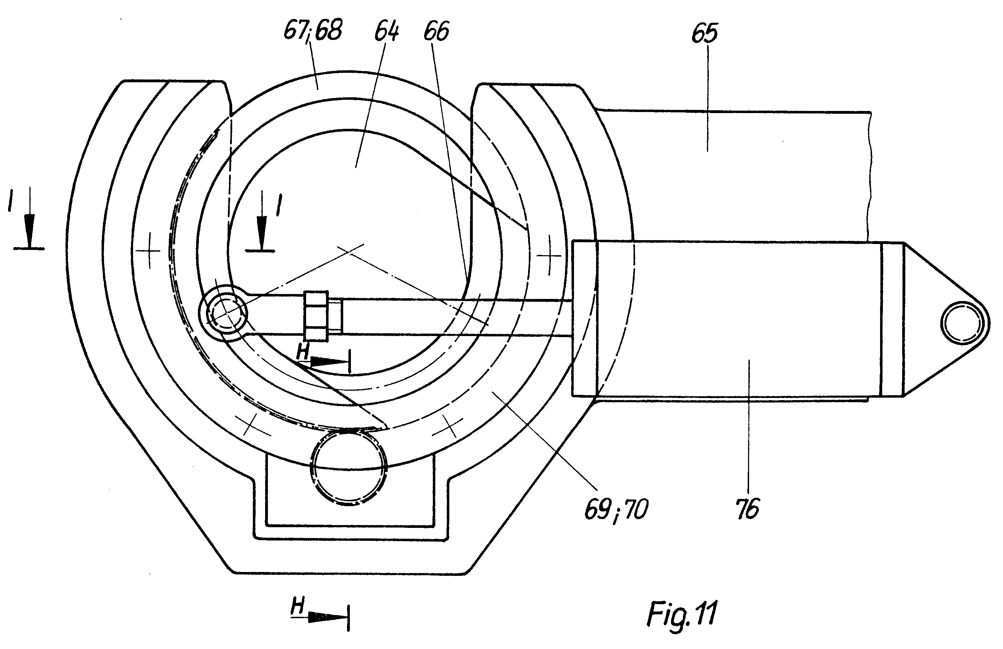

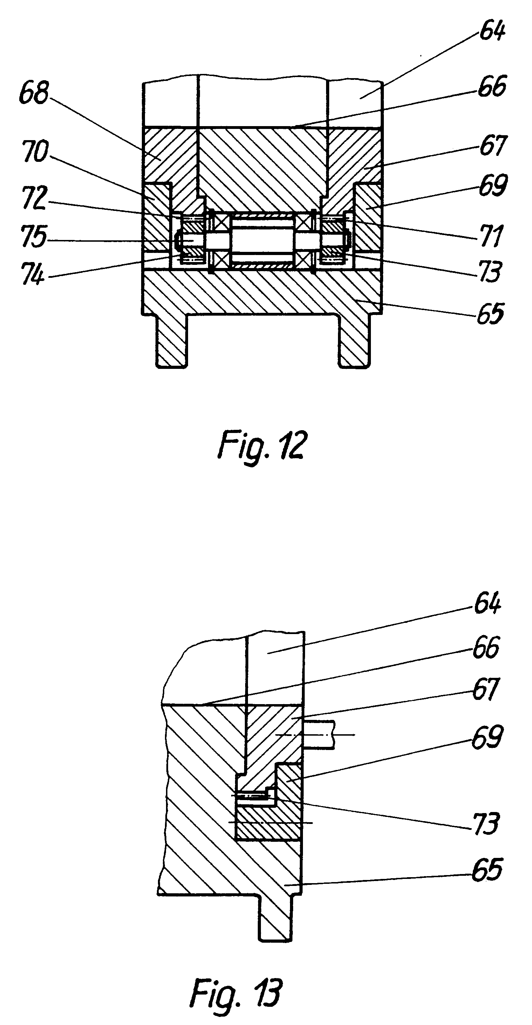

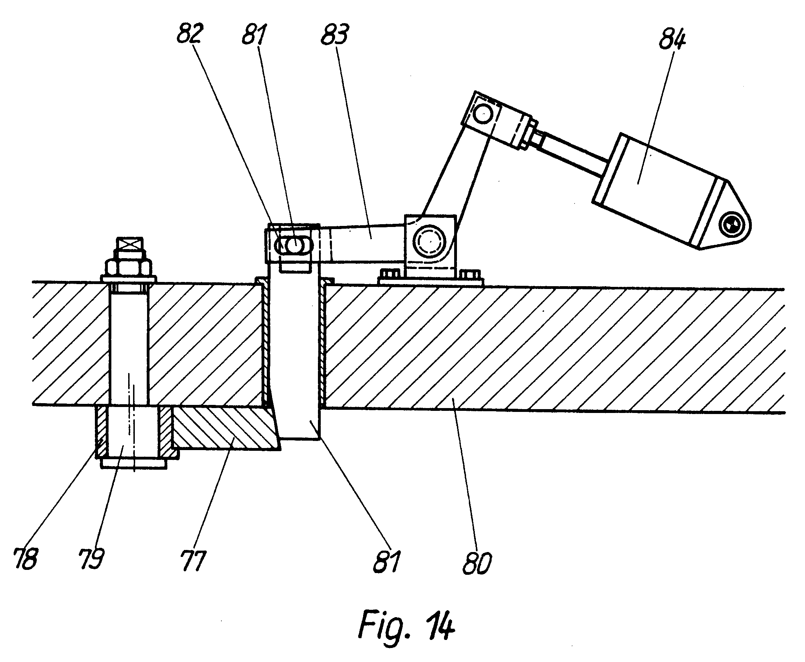

Eine dritte Variante eines Gehäuses 64 eines Hebels 65 zeigt Figur 11. Es besteht aus einer fest mit dem Hebel 65 verbundenen Pfanne 66 und zwei Verschlußgabeln 67; 68, die drehbar im Hebel 65 gelagert und mit Segmenten 69; 70 axial gesichert sind (Fig.13). Die Verschlußgabeln 67; 68 tragen jeweils ein Zahnsegment 71; 72, mit dem sie über eine im Hebel 65 gelagerte, mit Ritzeln 73; 74 bestückte Welle 75 in Antriebsverbindung stehen (Fig. 12). Der Antrieb selbst erfolgt mittels eines an der Verschlußgabel 67 angelenkten und sich gelenkig am Hebel 65 abstützenden Arbeitszylinders 76. Der halbkreisförmige Grund der Verschlußgabeln 67; 68 ist mit einer geringen Exzentrizität zu ihrem Drehpunkt angeordnet, um eine spielfreie Klemmung des im Gehäuse 64 zu lagernden Zylinderzapfens zu erzielen.

Das Gehäuse 64 wird durch Umsteuern des Arbeitszylinders 76 geöffnet. Dabei treibt die betätigte Verschlußgabel 67 über ihr Zahnsegment 69 und das Ritzel 73 die Welle 75 an, die ihrerseits mittels des Ritzels 74 auf das Zahnsegment 72 der Verschlußgabel 68 treibt und letztere ebenfalls in die Offenstellung fährt.

Figur 14 zeigt eine zu Figur 2 analoge Variante zum Arretieren des den Formzylinderzapfen aufnehmenden Hebels. Dieser Hebel 77 liegt im Druckbetrieb an dem Anschlag 78 an, der mittels des Exzenterbolzens 79 einstellbar an der Maschinenseitenwand 80 befestigt ist. Dem Anschlag 78 gegenüberliegend ist neben dem Hebel 77 ein angeschrägter Bolzen 81 angeordnet, der schiebbar in der Maschinenseitenwand 80 lagert. Er greift mit einem Bolzen 81 in die Langlöcher 82 eines Gabelhebels 83 ein, der schwenkbar im Maschinengestell angeordnet ist. Am Gabelhebel 83 greift ein schwenkbar am Maschinengestell gelagerter Arbeitszylinder 84 an, wodurch der Bolzen 81 den Hebel 77 spielfrei in seiner Anlageposition verkeilt.

Zur Herstellung der Schwenkbarkeit des Hebels 77 wird der Arbeitszylinder 84 umgesteuert, wodurch der Bolzen 81 in die Maschinenseitenwand 80 zurückgezogen wird und den Hebel 77 freigibt.

In den Ausführungsbeispielen ist die Lagerung für den Druckwerkzylinder an der Innenseite der bedienseitigen Maschinenwand plaziert. Sie kann ebenfalls zum Gegenstand der Erfindung gehörig an der Außenseite angeordnet sein. Die Erfindung wurde am Beispiel eines Offset-Druckwerkes anhand der Lagerung des Formzylinders beschrieben. Die gleichartige Lagerung des Übertragungszylinders wird ebenso unter Schutz gestellt. Die Erfindung ist gleichermaßen bei anderen Druckwerken anwendbar, die Zylinder gemäß dem Oberbegriff des 1. Patentanspruches enthalten.

## Patentansprüche

1. Lagerung für einen Druckwerkzylinder (1, 2) einer Rollenrotationsdruckmaschine, der einen auswechselbaren, hierzu seitlich durch eine Öffnung (49) einer Maschinenseitenwand (5, 80) schiebbaren Mantel trägt, wofür der zur Öffnung (49) zeigende Zapfen (6, 7) des Zylinders (1, 2) freilegbar ist, dadurch gekennzeichnet, daß der Zapfen (6, 7) des Zylinders in einem aufmachbaren Gehäuse (24, 50, 64) eines Hebels (8, 9, 51, 65, 77) aufgenommen wird, der an der Maschinenseitenwand (5, 80) parallel zu letzterer schwenkbar lagert, daß der Hebel (8, 9, 51, 65, 77) bei geöffnetem Gehäuse (25, 50, 64) aus einer ersten Endlage vom Zapfen (6, 7) weg schwenkbar ist und daß bei der Rückschwenkung in die erste Endlage der Schwenkweg von einem in der Maschinenseitenwand (5, 80) angeordneten Anschlag (12, 78) begrenzt wird und mit der der Anschlagseite des Hebels (8, 9, 51, 65, 77) gegenüberliegenden Seite ein Arretierelement zusammenarbeitet.

2. Lagerung nach Anspruch 1, dadurch gekennzeichnet, daß an dem Hebel (8, 9, 51, 65, 77) ein schwenkbar in der Maschinenseitenwand (5, 80) gelagerter Arbeitszylinder (11) anlenkt.

3. Lagerung nach Anspruch 1 oder 2, dadurch gekennzeichnet, daß der Anschlag (12, 78) auf einem in der Maschinenseitenwand (5, 80) gelagerten Exzenterbolzen (13, 79) angeordnet ist.

4. Lagerung nach einem der Ansprüche 1 bis 3, dadurch gekennzeichnet, daß mit der der Anschlagseite des Hebels (8) gegenüberliegenden Seite ein Exzenterbolzen (14) zusammenarbeitet, der dreh- und schiebbar in der Maschinenseitenwand (5) lagert, mittels eines in der Maschinenseitenwand (5) gelagerten Hebels (17), der mit zwei Rollen (16) in eine umlaufende Nut (15) des Exzenterbolzens (14) eingreift, mit einem schwenkbar in der Maschinenseitenwand (5) gelagerten Arbeitszylinder (18) in Verbindung steht sowie schiebbar in einer Nabe (19) geführt ist, die drehbar an der Maschinenseitenwand (5) befestigt ist und an der ein schwenkbar in der Maschinenseitenwand (5) gelagerter Arbeitszylinder (20) angelenkt ist.

5. Lagerung nach einem der Ansprüche 1 bis 3, dadurch gekennzeichnet, daß mit der der Anschlagseite des Hebels (77) gegenüberliegenden Seite ein angeschrägter Bolzen (81) zusammenarbeitet, der schiebbar in der Maschinenseitenwand (80) lagert und mittels eines Bolzens (81) in die Langlöcher (82) eines Gabelhebels (83) eingreift, der in der Maschinenseitenwand (80) gelagert ist und gelenkig mit einem ebenfalls schwenkbar in der Maschinenseitenwand (80) gelagerten Arbeitszylinder (84) verbunden ist.

6. Lagerung nach einem der Ansprüche 1 bis 5, dadurch gekennzeichnet, daß das Gehäuse (24) aus einer fest und einer schwenkbar mit dem Hebel (8) verbundenen Schale (25, 27) besteht, in der festen Schale (25) dreh- und schiebbar ein Haken (30) lagert, der mit einem Bolzen (29) der schwenkbaren Schale (27) zusammenarbeitet, der Haken (30) quer zur Schieberichtung ein Langloch (38) trägt, in das ein Exzenter (39) eingreift, der über einen Klemmhebel (40) mit einem am Hebel (8) schwenkbar gelagerten Arbeitszylinder (41) in Antriebsverbindung steht, und an der schwenkbaren Schale (27) ein schwenbar am Hebel (8) gelagerter Arbeitszylinder (28) angelenkt ist.

7. Lagerung nach einem der Ansprüche 1 bis 5, dadurch gekennzeichnet, daß das Gehäuse (50) aus einer fest und einer schwenkbar mit dem Hebel (51) verbundenen Schale (52, 54) besteht, in der festen Schale (52) schiebbar ein Stößel (56) gelagert ist, der mit einem Bolzen (57) der schwenkbaren Schale (54) zusammenarbeitet und quer zur Schieberichtung ein Langloch (59) trägt, in das ein Exzenter (60) eingreift, der über einen Klemmhebel (61) mit einem am Hebel (51) schwenkbar gelagerten Arbeitszylinder (62) in Antriebsverbindung steht, und weiterhin an der schwenkbaren Schale (54) ein schwenkbar am Hebel (51) gelagerter Arbeitszylinder (55) angelenkt ist.

8. Lagerung nach einem der Ansprüche 1 bis 5, dadurch gekennzeichnet, daß das Gehäuse (64) aus einer starr mit dem Hebel (65) verbundenen Pfanne (66) sowie einer oder mehreren Verschlußgabeln (67, 68) besteht, die drehbar im Hebel (65) gelagert sind und mit einem schwenkbar an letzterem gelagerten Arbeitszylinder (76) in Antriebsverbindung stehen.

## Claims

1. Bearing for a printing unit cylinder (1, 2) in a web-fed rotary printing machine, carrying an exchangeable casing movable laterally to the machine through an aperture (49) in a machine side wall (5, 80), for which the journal (6, 7) of the cylinder (1, 2) pointing towards the aperture (49) can be exposed, characterised in that the journal (6, 7) of the cylinder is received in an openable housing (24, 50, 64) of a lever (8, 9, 51, 65, 77) which is pivotably mounted on the machine side wall (5, 80) parallel to the latter, in that when the housing (25, 50, 64) is opened the lever (8, 9, 51, 65, 77) can be pivoted away from the journal (6, 7) out of a first extreme position, and in that when pivoted back into the first extreme position the pivoting path is limited by a stop (12, 78) disposed in the machine side wall (5, 80), and an arresting element cooperates with the side opposite the stop side of the lever (8, 9, 51, 65, 77).

2. Bearing according to claim 1, characterised in that a working cylinder (11) mounted pivotably in the machine side wall (5, 80) is hinged on the lever (8, 9, 51, 65, 77).

3. Bearing according to claim 1 or 2, characterised in that the stop (12, 78) is disposed on an eccentric pin (13, 79) mounted in the machine side wall (5, 80).

4. Bearing according to one of claims 1 to 3, characterised in that co-operating with the side opposite the stop side of the lever (8) is an eccentric pin (14) which is rotatably and displaceably mounted in the machine side wall (5), by means of a lever (17) mounted in the machine side wall (5), which lever engages with two rollers (16) into a circumferential groove (15) of the eccentric pin (14), is in connection with a working cylinder (18) pivotably mounted in the machine side wall (5), and is guided movably in a hub (19) which is rotatably secured on the machine side wall (5) and on which there is hinged a working cylinder (20) mounted pivotably in the machine side wall (5).

5. Bearing according to one of claims 1 to 3, characterised in that a chamfered pin (81) co-operates with the side opposite the stop side of the lever (77), the pin being mounted displaceably in the machine side wall (80) and engaging by means of a pin (81) into the slots (82) of a forked lever (83) which is mounted in the machine side wall (80) and is hingedly connected to a working cylinder (84) also mounted pivotably in the machine side wall (80).

6. Bearing according to one of claims 1 to 5, characterised in that the housing (24) comprises two shells (25, 27), one fixedly connected to the lever (8) and one pivotably connected thereto, mounted rotatably and displaceably in the fixed shell (25) is a hook (29) which co-operates with a pin (30) of the pivotable shell (27), transversely to the direction of displacement the hook (29) carries a slot (38) into which engages a cam (39) which is operatively connected by means of a clamping lever (40) to a working cylinder (41) mounted pivotably on the lever (8), and hinged on the pivotable shell (27) is a working cylinder (28) mounted pivotably on the lever (8).

7. Bearing according to one of claims 1 to 5, characterised in that the housing (50) comprises two shells (52, 54), one fixedly connected to the lever (51) and one pivotably connected thereto, mounted movably in the fixed shell (52) is a push rod (56) which co-operates with a pin (57) of the pivotable shell (54), and transversely to the direction of displacement carries a slot (59) into which engages a cam (60) which is operatively connected by means of a clamping lever (61) to a working cylinder (62) pivotably mounted on the lever (51) and, furthermore, hinged on the pivotable shell (54) is a working cylinder (55) mounted pivotably on the lever (51).

8. Bearing according to one of claims 1 to 5, characterised in that the housing (64) comprises a pan (66) rigidly connected to the lever (65), and one or more locking forks (67, 68) which are mounted rotatably in the lever (65) and are operatively connected to a working cylinder (76) mounted pivotably on the latter.

## Revendications

1. Palier pour un cylindre (1, 2) de groupe d'impression d'une presse à imprimer rotative à bobines, cylindre qui porte une enveloppe pouvant être remplacée en la faisant coulisser latéralement à travers une ouverture (49) d'une paroi latérale (5, 80) de la presse, le tourillon (6, 7) du cylindre (1, 2) qui est tourné vers l'ouverture (49) pouvant à cet effet être libéré, **caractérisé** en ce que le tourillon (6, 7) du cylindre est reçu dans un logement (24, 50, 64), pouvant être ouvert, d'un lever (8, 9, 51, 65, 77) qui est monté à pivotement sur la paroi latérale (5, 80) de la presse parallèlement à cette paroi, en ce que le levier (8, 9, 51, 65, 77) peut, lorsque le logement (24, 50, 64) est ouvert, être éloigné du tourillon (6, 7) par pivotement à partir d'une première position finale, et en ce que, lors du pivotement de retour dans la première position finale, la course de pivotement est limitée par une butée (12, 78) disposée dans la paroi latérale (5, 80) de la presse et un élément d'arrêt coopère avec le côté opposé au côté de butée du levier (8, 9, 51, 65, 77).

2. Palier selon la revendication 1, **caractérisé** en ce qu'un vérin (11), monté à pivotement dans la paroi latérale (5, 80) de la presse, est articulé au levier (8, 9, 51, 65, 77).

3. Palier selon la revendication 1 ou 2, **caractérisé** en ce que la butée (12, 78) est disposée sur un axe d'excentrique (13, 79) monté dans la paroi latérale (5, 80) de la presse.

4. Palier selon l'une des revendications 1 à 3, **caractérisé** en ce qu'un axe d'excentrique (14) coopère avec le côté opposé au côté de butée du levier (8), axe qui est monté à rotation et à coulissement dans la paroi latérale (5) de la presse, axe qui, par l'intermédiaire d'un levier (17) monté dans la paroi latérale (5) de la presse et s'engageant par deux galets (16) dans une rainure entourante (15) de l'axe d'excentrique (14), est relié à un vérin (18) monté à pivotement dans la paroi latérale (5) de la presse, et axe qui est guidé à coulissement dans un moyeu (19), fixé à rotation sur la paroi latérale (5) de la presse et auquel est articulé un vérin (22) monté à pivotement dans la paroi latérale (5) de la presse.

5. Palier selon l'une des revendications 1 à 3, **caractérisé** en ce qu'un axe chanfreiné (81) coopère avec le côté opposé au côté de butée du lever (77), axe qui est monté à coulissement dans la paroi latérale (80) de la presse et qui, au moyen d'un maneton (81), s'engage dans les trous oblongs (82) d'un lever fourchu (83), qui est monté à ajouter dans la paroi latérale (80) de la presse et est relié en articulation à un vérin (84), lui aussi monté à pivotement dans la paroi latérale (80) de la presse.

6. Palier selon l'une des revendications 1 à 5, **caractérisé** en ce que le logement (24) est constitué d'une coque (25) fixement assemblée au lever (8) et d'une coque (27) assemblée à pivotement au levier (8), un crochet (29) est monté à rotation et coulissement dans la coque fixe (25), crochet qui coopère avec un axe (30) de la coque pivotante (27), le crochet (29) porte, transversalement à la direction de coulissement, un trou oblong (38) dans lequel s'engage un excentrique (39) qui, par l'intermédiaire d'un levier de serrage (40), est relié en entraînement à un vérin (41) monté à pivotement sur le levier (8), et un vérin (28), monté à pivotement sur le lever (8), est articulé à la coque pivotante (27).

7. Palier selon l'une des revendications 1 à 5, **caractérisé** en ce que le logement (50) est constitué d'une coque (52) fixement assemblée au levier (51) et d'une coque (54) assemblée à pivotement au levier (51), un coulisseau (56) est monté à coulissement dans la coque fixe (52), coulisseau qui coopère avec un axe (57) de la coque pivotante (54) et qui porte, transversalement à la direction de coulissement, un trou oblong (59) dans lequel s'engage un excentrique (60) qui, par l'intermédiaire d'un levier de serrage (61), est relié en entraînement à un vérin (62) monté à pivotement sur le lever (51), et un vérin (55), monté à pivotement sur le levier (51), est en outre articulé à la coque pivotante (54).

8. Palier selon l'une des revendications 1 à 5, **caractérisé** en ce que le logement (64) est constitué d'une poche (66) rigidement assemblée au levier (65) et d'une ou plusieurs chapes de fermeture (67, 68) qui sont montées à rotation dans le lever (65) et sont reliées en entraînement à un vérin (76) monté à pivotement sur ce dernier.
